# EUROPEAN PATENT APPLICATION

(11) **EP 1 571 558 A1**
(43) Date of publication of application: **07.09.2005**
(21) Application number: 03812692.6
(22) Date of filing: 28.11.2003
(51) Int. Cl.: G06F 13/00, G06F 12/00

(54) **RECEIVER APPARATUS, RECEIVING SYSTEM AND RECEIVING METHOD**

(30) Priority: 09.12.2002 JP 2002357111
(71) Applicant: MATSUSHITA ELECTRIC INDUSTRIAL CO., LTD., Osaka 571-8501 (JP)
(72) Inventor: ISHIMATSU, Hideaki, Hirakata-shi, Osaka 573-0075 (JP)
(74) Representative: Pautex Schneider, Nicole Véronique
(86) International application number: PCT/JP2003/015304
(87) International publication number: WO 2004/053704

(57) **Abstract**

The present invention provides a receiving apparatus, a receiving system and a receiving method wherein a waiting time until the user obtains information is short and a function error hardly occurs even if a communication failure occurs with one storage apparatus, for example. The receiving apparatus in accordance with the present invention comprises an operation section to which an information receiving command is input; a communication section for transmitting transmission request information for requesting the transmission of the information input to the operation section to multiple storage apparatuses and for sequentially receiving divided information blocks obtained by dividing the information and transmitted from the multiple storage apparatuses; a selection section for selecting only the divided information block received first from one of the storage apparatuses or a predetermined group of the divided information blocks with respect to each of the divided information blocks received by the communication section or each predetermined group of the divided information blocks; and an output section for outputting the divided information block or the predetermined group of the divided information blocks selected by the selection section.

## Description

### TECHNICAL FIELD

The present invention relates to a receiving apparatus, a receiving system and receiving method.

### BACKGROUND ART

In recent years, numerous download sites (storage apparatuses in which information is stored) have been provided on the Internet, and a user can obtain much information via the Internet. A receiving apparatus of a conventional example for obtaining information from download sites will be described. The user selects one download site in which information desired by the user is stored and inputs the address information of the download site to the receiving apparatus of the conventional example. The receiving apparatus of the conventional example gains access to the download site, downloads the information and displays the information on a display.

However, in the receiving apparatus of the conventional example, in the case that download processing was interrupted because of a network failure, a down of a destination server (download site) or the like during downloading, the downloading did not terminate normally, and a problem of being unable to obtain complete information was caused.

In a case, there is a site in which the same information as that stored in the selected download site is stored and from which the information can be downloaded at a speed higher than that from the selected download site. However, in such a case, the receiving apparatus of the conventional example gains access to only one download site and obtains the information; hence, no information can be obtained from the site in which high-speed downloading is possible.

The present invention is intended to provide a receiving apparatus, a receiving system and a receiving method wherein a waiting time until the user obtains information is short and a function error hardly occurs even if a communication failure occurs with one storage apparatus, for example.

### DISCLOSURE OF THE INVENTION

For the purpose of solving the above-mentioned problems, the present invention has configurations described below.

A receiving apparatus in accordance with an aspect of the present invention comprises an operation section to which an information receiving command is input; a communication section for transmitting transmission request information for requesting the transmission of the information input to the above-mentioned operation section to multiple storage apparatuses and for sequentially receiving divided information blocks obtained by dividing the above-mentioned information and transmitted from the above-mentioned multiple storage apparatuses; a selection section for selecting only the above-mentioned divided information block received first from one of the above-mentioned storage apparatuses or a predetermined group of the above-mentioned divided information blocks with respect to each of the above-mentioned divided information blocks received by the above-mentioned communication section or each predetermined group of the above-mentioned divided information blocks; and an output section for outputting the above-mentioned divided information block or the predetermined group of the above-mentioned divided information blocks selected by the above-mentioned selection section.

The receiving apparatus in accordance with another aspect of the present invention is characterized in that the above-mentioned communication section transmits, to a management apparatus, address information transmission request information for requesting the address information of the storage apparatuses in which the above-mentioned information is stored, receives the address information of the above-mentioned multiple storage apparatuses from the above-mentioned management apparatus and transmits transmission request information for requesting the transmission of the above-mentioned information to the above-mentioned multiple storage apparatuses on the basis of the above-mentioned address information.

A receiving system in accordance with still another aspect of the present invention is characterized in that the above-mentioned management apparatus, the above-mentioned multiple storage apparatuses and the above-mentioned receiving apparatus are connected via a communication network.

A receiving method in accordance with yet still another aspect of the present invention comprises an operation input step of inputting an information receiving command; a transmission request step of transmitting transmission request information for requesting the transmission of the above-mentioned information to multiple storage apparatuses; a divided information receiving step of sequentially receiving divided information blocks obtained by dividing the above-mentioned information and transmitted from the above-mentioned multiple storage apparatuses; a selection step of selecting only the above-mentioned divided information block received first from one of the above-mentioned storage apparatus or a predetermined group of the above-mentioned divided information blocks with respect to each of the above-mentioned divided information blocks or each predetermined group of the above-mentioned divided information blocks; and an output step of outputting the above-mentioned divided information block or the predetermined group of the above-mentioned divided information blocks having been selected.

The receiving method in accordance with a further aspect of the present invention further comprises an address information transmission requesting step for transmitting, to a management apparatus, address information transmission request information for requesting the address information of the storage apparatuses in which the above-mentioned information is stored; and an address information receiving step of receiving the address information of the above-mentioned multiple storage apparatuses from the above-mentioned management apparatus, wherein in the above-mentioned transmission requesting step, the above-mentioned transmission request information is transmitted to the above-mentioned multiple storage apparatuses on the basis of the above-mentioned address information having been received.

The present invention has an action capable of realizing a receiving apparatus, a receiving system and a receiving method wherein a waiting time until the user obtains information is short and a function error hardly occurs even if a communication failure occurs with one storage apparatus, for example.

While the novel features of the invention are set forth particularly in the appended claims, the invention, both as to organization and content, will be better understood and appreciated, along with other objects and features thereof, from the following detailed description taken in conjunction with the drawings.

### BRIEF DESCRIPTION OF DRAWINGS

FIG. 1 is a view showing the configuration of a receiving system in accordance with Embodiment 1, Embodiment 2 and Embodiment 3;
FIG. 2 is the flowchart of the receiving system in accordance with Embodiment 1;
FIG. 3 shows the data format of the transmission packet for divided information blocks in accordance with Embodiment 1 and Embodiment 2;
FIG. 4 is the flowchart of a receiving system in accordance with Embodiment 2;
FIG. 5 is the flowchart of a receiving system in accordance with Embodiment 3;
FIG. 6 is a detailed flowchart for processing each divided information group in accordance with Embodiment 3;
FIG. 7 shows the data format of the transmission packet for divided information blocks in accordance with Embodiment 3;
FIG. 8A is a view showing a data receiving buffer and a data processing buffer at the time when divided information blocks A(p) to A(q) are being received, and FIG. 8B is a view showing the data receiving buffer and the data processing buffer at the time when the receiving of the divided information blocks A(p) to A(q) has been completed and when the receiving of divided information blocks A(q + 1) to A(r) has started; and
FIG. 9 is a view showing the timing at which a receiving apparatus 101 have received divided information blocks from respective storage apparatuses 103 to 105 in sequential order.

It will be recognized that some or all of the figures are schematic representations for purposes of illustration and do not necessarily depict the actual relative sizes or locations of the elements shown.

### BEST MODES FOR CARRYING OUT THE INVENTION

Embodiments specifically exemplifying the best modes for carried out the present invention will be described below together with the drawings.

### <<Embodiment 1>>

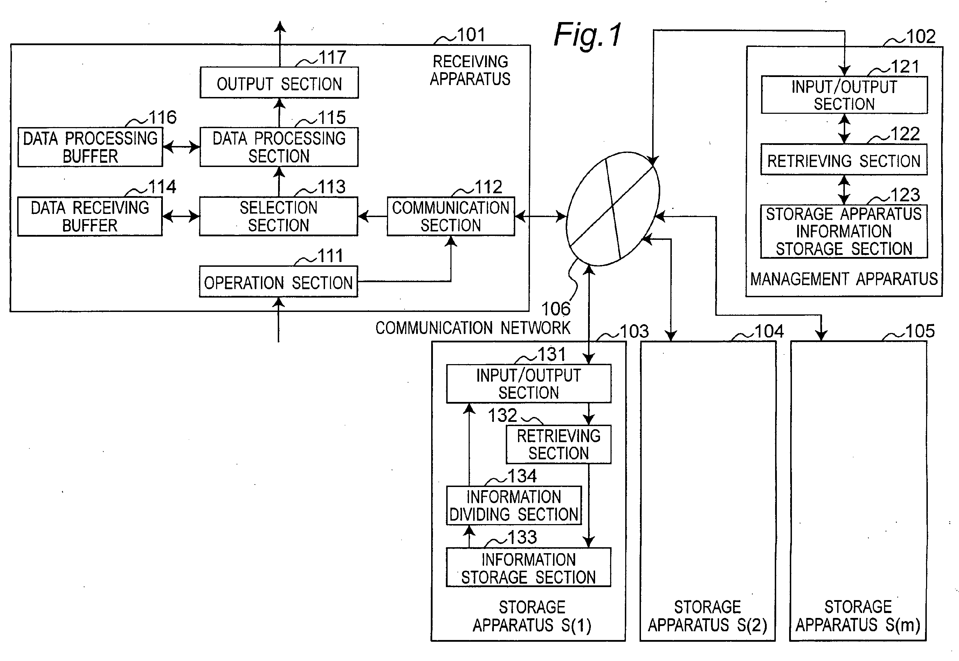

A receiving apparatus in accordance with Embodiment 1 will be described with reference to FIGS. 1 to 3 and 9. FIG. 1 shows the configuration of a receiving system in accordance with Embodiment 1. In FIG. 1, numeral 101 designates a receiving apparatus, numeral 102 designates a management apparatus, numeral 103 designates a storage apparatus S(1), numeral 104 designates a storage apparatus S(2), numeral 105 designates a storage apparatus S(m) (m is any given positive integer. In the embodiments, m is a positive integer of 2 or more), and numeral 106 designates a communication network. The communication network is the Internet, telephone or wireless network, for example.

The receiving apparatus 101 receives the address information of the storage apparatuses 103 to 105 from the management apparatus 102 via the communication network 106, and receives information from the storage apparatuses 103 to 105 on the basis of the address information.

The receiving apparatus 101 comprises an operation section 111, a communication section 112, a selection section 113, a data receiving buffer 114, a data processing section 115, a data processing buffer 116 and an output section 117.

When the operation section 111 inputs a command for receiving information A (for example, video information and audio information) from the user, the communication section 112 automatically transmits, to the management apparatus 102, address information transmission request information (The information includes the information identifier of the information A. In the present description, the information identifier is a unique combination of 8-digit alphanumeric characters.) for requesting the address information of multiple storage apparatuses in which the information A is stored. The communication section 112 receives the address information of the multiple storage apparatuses 103 to 105 from the management apparatus 102, and transmits transmission request information (including the information identifier of the information A) for requesting the transmission of the information A to the multiple storage apparatuses 103 to 105. The communication section 112 sequentially receives divided information blocks A(1) to A(n) generated by dividing the information A into n blocks (n is a positive integer of 2 or more) and transmitted from the respective multiple storage apparatuses 103 to 105.

Regarding respective divided information blocks A(i) (i is a positive integer; 1 ≤ i ≤ n), the selection section 113 selects only the first received divided information blocks A(i) from among the divided information blocks A(i) transmitted from the respective multiple storage apparatuses 103 to 105, and sequentially stores the information blocks in the data receiving buffer 114. The selection section 113 sequentially transfers the divided information blocks A(i) (1 ≤ i ≤ n) stored in the data receiving buffer 114 to the data processing section 115. The data processing section 115 stores the divided information blocks A(i) in the data processing buffer 116 and carries out processing (for example, data-compressed video information and audio information are decompressed). The output section 117 outputs the original information A obtained by combining the divided information blocks A(1) to A(n) processed by the data processing section 115.

The management apparatus 102 comprises an input/output section 121, a retrieving section 122 and a storage apparatus information storage section 123. The storage apparatus information storage section 123 stores the information identifier of information and the address information of the multiple storage apparatuses in which the information is stored, so as to be related mutually.

When the input/output section 121 receives the address information transmission request information for requesting the transmission of the address information of the storage apparatuses in which the information A transmitted from the receiving apparatus 101 is stored, the retrieving section 122 retrieves the address information of the multiple storage apparatuses having the information A from the storage apparatus information storage section 123. The input/output section 121 transmits the retrieved address information of the multiple storage apparatuses 103, 104 and 105 to the receiving apparatus 101.

The storage apparatus 103 comprises an input/output section 131, a retrieving section 132, an information storage section 133 and an information dividing section 134. The information storage section 133 stores the information identifier of information and the information so as to be related mutually. The storage apparatuses 104 and 105 have the same configuration as that of the storage apparatus 103.

When the input/output section 131 receives transmission request information for requesting the transmission of the information A transmitted from the receiving apparatus 101, the retrieving section 132 retrieves the information A from the information storage section 133. The information dividing section 134 divides the retrieved information A into n blocks and sequentially outputs divided information blocks A(1) to A(n). The input/output section 131 sequentially transmits the divided information blocks A(1) to A(n) to the receiving apparatus 101.

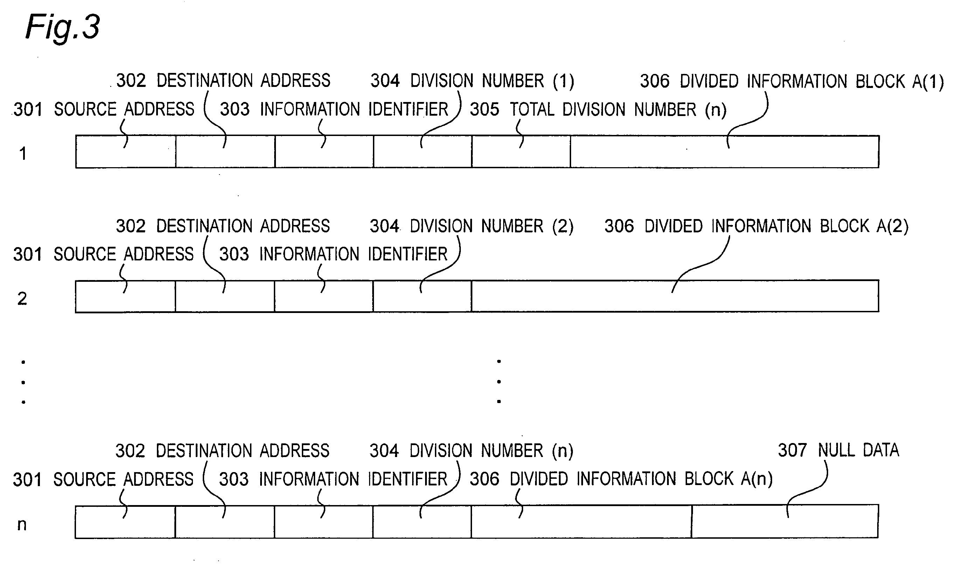

Next, the data format of the transmission packet for the divided information blocks will be described with reference to FIG. 3. FIG. 3 shows the data format of the transmission packet for the divided information blocks.

The first transmission packet has a source address 301 (the address of a storage apparatus), a destination address 302 (the address of the receiving apparatus), an information identifier 303 (the information identifier of the information A), a division number (1) 304, a total division number (n) 305 and a divided information block A(1) 306. Since the first transmission packet has the information of the total division number (n), the receiving apparatus 101 can recognize how many blocks the information A has been divided into.

The second transmission packet has a source address 301, a destination address 302, an information identifier 303, a division number (2) 304 and a divided information block A(2) 306. The third and subsequent transmission packets have similar formats.

The nth transmission packet has a source address 301, a destination address 302, an information identifier 303, a division number (n) 304 and a divided information block A(n) 306 and NULL data 307. The information dividing section 134 in accordance with Embodiment 1 divides the information A into n divided information blocks A(i) and adds the NULL data (the data length = a constant value L - the data length of the divided information block A(n)) to the last divided information block A(n) so that the data length of the transmission packet becomes the constant value L.

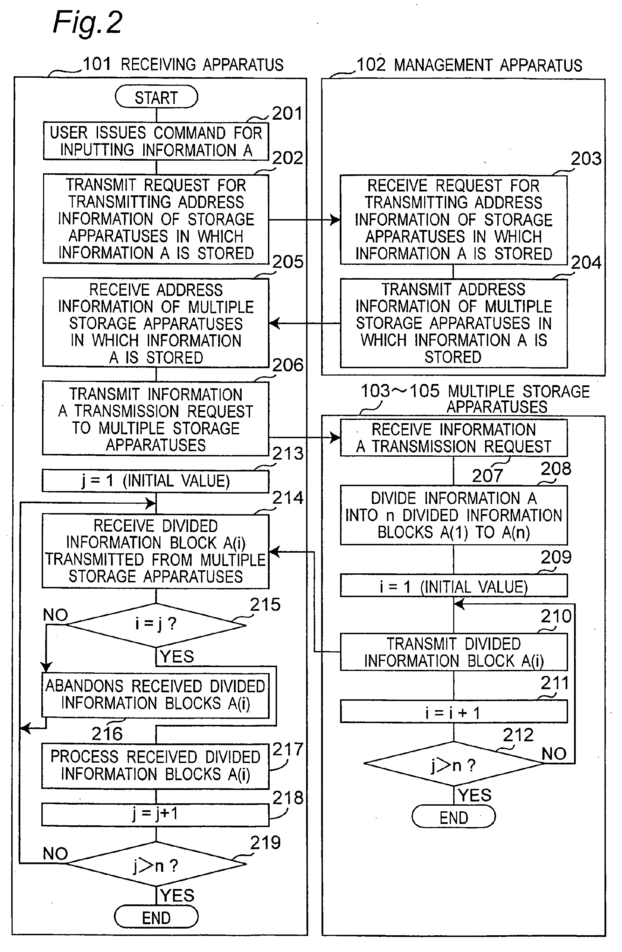

FIG. 2 is the flowchart of the receiving system in accordance with Embodiment 1.

The user inputs an information A input command to the operation section 111 of the receiving apparatus 101 (at step 201). The communication section 112 transmits a request for transmitting the address information of the storage apparatuses in which the information A is stored, to the management apparatus 102 via the communication network 106 (at step 202). The address information of the management apparatus has been stored beforehand in the receiving apparatus.

The input/output section 121 of the management apparatus 102 receives the request for transmitting the address information of the storage apparatuses in which the information A is stored (at step 203). The retrieving section 122 retrieves the address information of the multiple storage apparatuses in which the information A is stored. The input/output section 121 transmits, to the receiving apparatus 101, the address information of the multiple storage apparatuses in which the information A is stored (at step 204).

The communication section 112 of the receiving apparatus 101 receives the address information of the multiple storage apparatuses in which the information A is stored (at step 205), and transmits an information A transmission request to the multiple storage apparatuses on the basis of the address information (at step 206).

The input/output section 131 of each of the multiple storage apparatuses 103 to 105 receives the information A transmission request (at step 207). The retrieving section 132 retrieves the information A from the information storage section 133. The information dividing section 134 of each of the storage apparatuses 103 to 105 divides the information A stored in the information storage section 133 into n divided information blocks A(1) to A(n) (at step 208). An initial value 1 is set in variable i (at step 209). The input/output section 131 of each of the storage apparatuses 103 to 105 transmits the divided information block A(i) to the receiving apparatus 101 (at step 210), and i is incremented (at step 211). A judgment is made as to whether i is larger than the total division number n or not (at step 212). If i is not larger than the total division number n, the processing returns to step 210 (until i becomes equal to the total division number n), and the input/output section 131 repeats the transmission of the divided information block A(i). Hence, the input/output section 131 of each of the storage apparatuses 103 to 105 sequentially transmits the divided information blocks A(1) to A(n) to the receiving apparatus 101. If i becomes larger than the total division number n at step 212, each of the storage apparatuses 103 to 105 terminates processing.

In the receiving apparatus 101, the initial value of variable j is set at 1 (at step 213). At step 214, the communication section 112 of the receiving apparatus 101 receives the divided information block A(i) (1 ≤ i ≤ n) transmitted from the multiple storage apparatuses 103 to 105. The selection section 113 of the receiving apparatus 101 makes a judgment as to whether variables i and j are equal or not (at step 215). If they are equal, the processing advances to step 217, and the divided information block A(i) received by the data processing section 115 is processed (the selection section 113 stores the divided information block A(i) in the data receiving buffer 114, and then the data processing section 115 processes the divided information block A(i)). If they are not equal at step 215, the processing advances to step 216, and the received divided information block A(i) is abandoned. Hence, the receiving apparatus 101 can select only the first received information block A(i). Then, j is incremented (at step 218). A judgment is made as to whether j is larger than n or not (at step 219); if j is not larger than n, the processing returns to step 214, and if j is larger than n, the processing terminates.

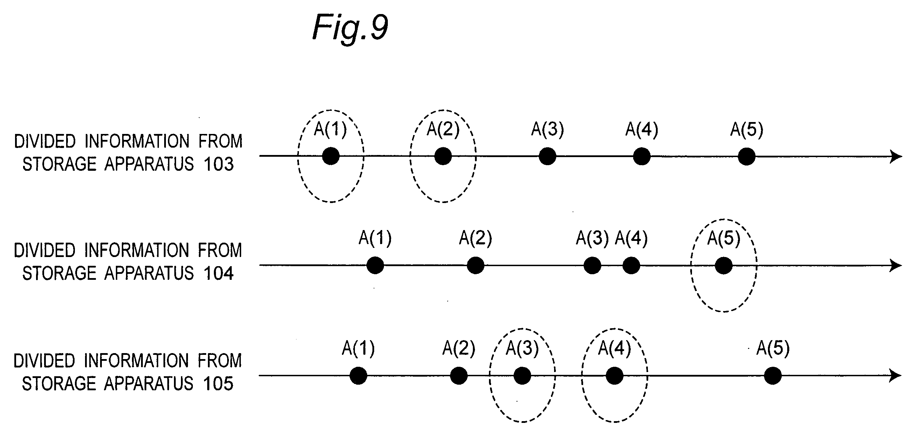

FIG. 9 shows the timing at which the receiving apparatus 101 has received divided information blocks from the respective storage apparatuses 103 to 105 in sequential order. Regarding the respective divided information blocks A(i), the receiving apparatus 101 processes only the first received divided information block and abandons the other divided information blocks using the processing at steps 213 to 219 described above. In FIG. 9, the receiving apparatus 101 processes only the divided information blocks A(1) and A(2) transmitted from the storage apparatus 103, only the divided information blocks A(3) and A(4) transmitted from the storage apparatus 105 and only the divided information block A(5) transmitted from the storage apparatus 104, and abandons the other divided information blocks received later (for example, the divided information blocks A(1) and A(2) transmitted from the storage apparatuses 104 and 105).

### <<Embodiment 2>>

A receiving apparatus in accordance with Embodiment 2 will be described with reference to FIGS. 1, 3, 4 and 9.

In Embodiment 1, the receiving apparatus 101 requested the multiple storage apparatuses 103 to 105 to transmit information. In Embodiment 2, the receiving apparatus 101 requests the management apparatus 102 to transmit information, and the management apparatus 102, having received the request, requests the multiple storage apparatuses 103 to 105 to transmit information to the receiving apparatus 101. In other respects, the two are the same. The configuration (FIG. 1) of a receiving system and the data format (FIG. 3) of a transmission packet including a divided information block in accordance with Embodiment 2 are the same as those in accordance with Embodiment 1.

In Embodiment 2, when the operation section 111 of the receiving apparatus 101 inputs a command for receiving information A (for example, video information and audio information) from the user, the communication section 112 transmits a request (including the information identifier of the information A) for transmitting the information A via the communication network 106 to the management apparatus 102 having the address information of the multiple storage apparatuses in which the information A is stored. When the input/output section 121 of the management apparatus 102 receives the transmission request information for requesting the transmission of the information A transmitted from the receiving apparatus 101, the retrieving section 122 retrieves the address information of the multiple storage apparatuses having the information A from the storage apparatus information storage section 123. The input/output section 121 requests the storage apparatuses 103 to 105 to transmit the information A to the user on the basis of the retrieved address information of the multiple storage apparatuses 103 to 105.

The input/output section 131 of each of the storage apparatuses 103 to 105 receives request information for transmitting, to the user, the information A transmitted from the management apparatus 102. The retrieving section 132 retrieves the information A from the information storage section 133. The information dividing section 134 divides the information A and generates divided information blocks A(1) to A(n). The input/output section 131 outputs and transmits the divided information blocks A to the receiving apparatus 101. The selection section 113 of the receiving apparatus 101 selects only the first received respective divided information blocks A(i) from among the respective divided information blocks A(i) (1 ≤ i ≤ n) transmitted from the multiple storage apparatuses 103 to 105, and sequentially stores the information blocks in the data receiving buffer 114. The selection section 113 sequentially transfers the divided information blocks A(i) (1 ≤ i ≤ n) stored in the data receiving buffer 114 to the data processing section 115. The data processing section 115 stores the divided information blocks A(i) in the data processing buffer 116 and carries out processing (for example, data-compressed video information and audio information are decompressed). The output section 117 outputs the original information A obtained by combining the divided information blocks A(1) to A(n) processed by the data processing section 115.

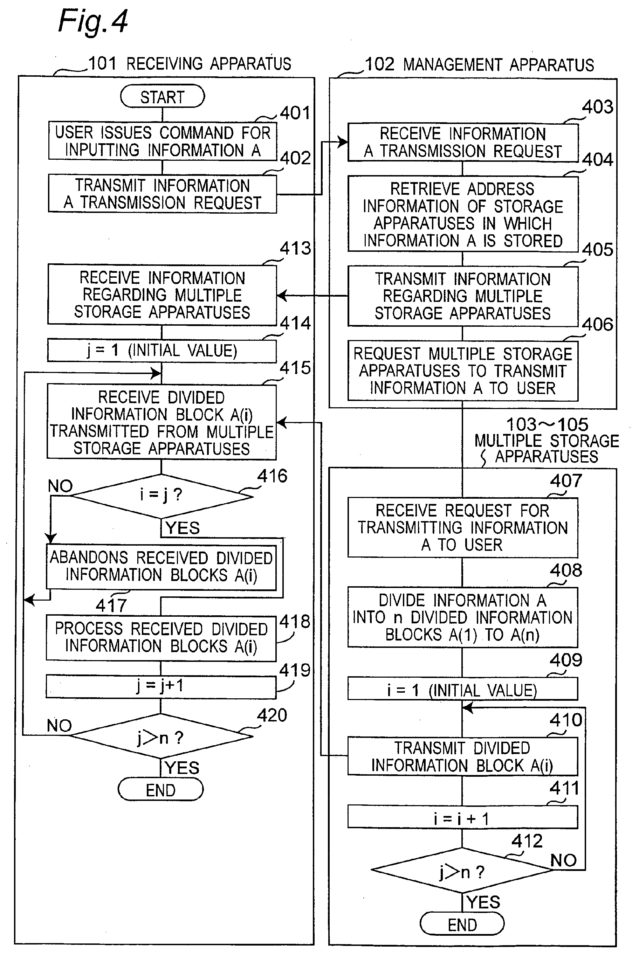

FIG. 4 is the flowchart of the receiving system in accordance with Embodiment 2.

The user inputs an information A input command to the operation section 111 of the receiving apparatus 101 (at step 401). The communication section 112 automatically transmits transmission request information for requesting the transmission of the information A, via the communication network 106 to the management apparatus 102 having the address information of the storage apparatuses in which the information A is stored (at step 402).

The input/output section 121 of the management apparatus 102 receives the request for transmitting the information A (at step 403). The retrieving section 122 of the management apparatus 102 retrieves the address information of the storage apparatuses in which the information A is stored (at step 404). The input/output section 121 of the management apparatus 102 transmits, to the receiving apparatus 101, the information regarding the multiple storage apparatuses in which the information A is stored (at step 405). The communication section 112 of the receiving apparatus 101 receives the information regarding the multiple storage apparatuses (for example, the address information of the multiple storage apparatuses) (at step 413). The selection section 113 recognizes that information will be transmitted from these storage apparatuses. Steps 405 and 413 may not be required. At step 406, the input/output section 121 of the management apparatus 102 requests the multiple storage apparatuses 103 to 105 to transmit the information A to the user.

The input/output section 131 of each of the multiple storage apparatuses 103 to 105 receives the request for transmitting the information A to the receiving apparatus 101 (at step 407). The retrieving section 132 retrieves the information A from the information storage section 133. The information dividing section 134 of each of the storage apparatuses 103 to 105 divides the information A stored in the information storage section 133 into n divided information blocks A(1) to A(n) (at step 408). An initial value 1 is set in variable i (at step 409). The input/output section 131 of each of the respective storage apparatuses 103 to 105 transmits the divided information block A(i) to the receiving apparatus 101 (at step 410), and i is incremented (at step 411). A judgment is made as to whether i is larger than the total division number n or not (at step 412). If i is not larger than the total division number n, the processing returns to step 410 (until i becomes equal to the total division number n), and the input/output section 131 repeats the transmission of the divided information block A(i). Hence, the input/output section 131 of each of the storage apparatuses 103 to 105 sequentially transmits the divided information blocks A(1) to A(n) to the receiving apparatus 101. If i becomes larger than the total division number n at step 412, each of the storage apparatuses 103 to 105 terminates the processing.

In the receiving apparatus 101, the initial value of variable j is set at 1 (at step 414). At step 415, the receiving apparatus 101 receives the divided information block A(i) transmitted from the multiple storage apparatuses 103 to 105. The selection section 113 of the receiving apparatus 101 makes a judgment as to whether variables i and j are equal or not (at step 416). If they are equal, the processing advances to step 418, and the selection section 113 stores the divided information blocks A(i) in the data receiving buffer 114. Then, the data processing section 115 processes the divided information block A(i). If i and j are not equal at step 416, the processing advances to step 417, and the received divided information block A(i) is abandoned. Hence, the receiving apparatus 101 can select only the first received information block A(i). Then, j is incremented (at step 419). A judgment is made as to whether j is larger than n or not (at step 420); if j is not larger than n, the processing returns to step 415, and if j is larger than n, the processing terminates.

### <<Embodiment 3>>

A receiving system in accordance with Embodiment 3 will be described with reference to FIGS. 1 and 5 to 9. In Embodiment 1, when the receiving apparatus received one divided information block, the receiving apparatus was able to process the divided information block. In Embodiment 3, when the receiving apparatus receives multiple divided information blocks (a divided information group), the receiving apparatus can process the divided information group. In other respects, Embodiment 3 and Embodiment 1 are the same. The configuration (FIG. 1) of the receiving system is the same as that in accordance with Embodiment 1.

When the operation section 111 of the receiving apparatus 101 in accordance with Embodiment 3 inputs a command for receiving information A (for example, video information and audio information) from the user, the communication section 112 automatically transmits, to the management apparatus 102, address information transmission request information for requesting the address information of the multiple storage apparatuses in which the information A is stored. The communication section 112 receives the address information of the multiple storage apparatuses 103 to 105 from the management apparatus 102, and transmits transmission request information for requesting the transmission of the information A to the multiple storage apparatuses 103 to 105 on the basis of the address information. The communication section 112 sequentially receives the divided information blocks A(i) transmitted from the multiple storage apparatuses 103 to 105.

In Embodiment 3, the receiving apparatus 101 is provided with buffer areas, inside the data receiving buffer 114, as many as the number of the storage apparatuses in which the information A is stored (each buffer area corresponds to one storage apparatus), and the received divided information blocks A(i) are stored in the buffer area corresponding to the storage apparatus from which they are transmitted. The receiving apparatus 101 carries out processing for each predetermined divided information group.

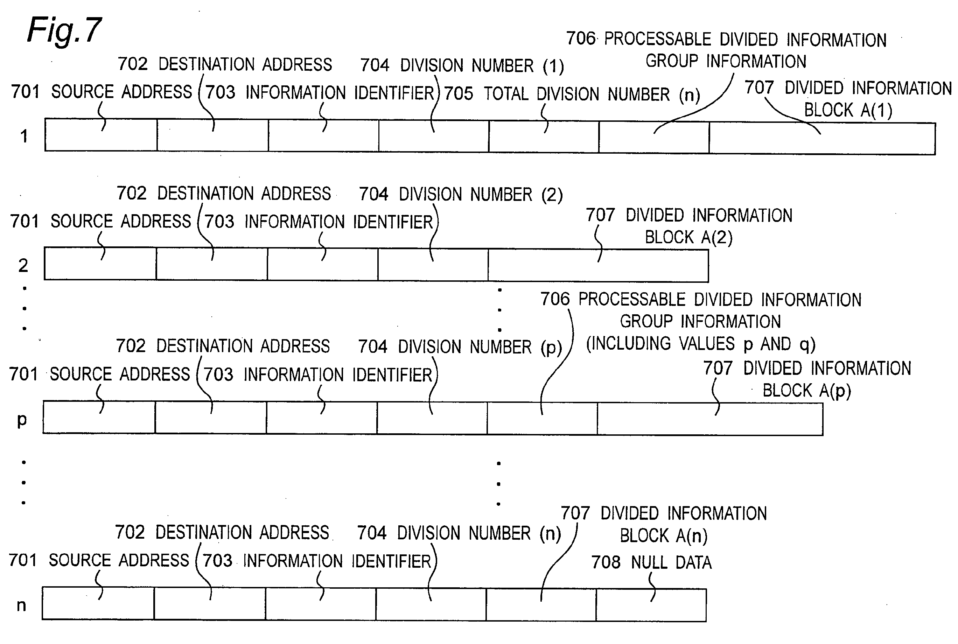

The data format of the transmission packet for the divided information blocks in accordance with Embodiment 3 will be described using FIG. 7.

The first transmission packet has a source address 701 (the address of a storage apparatus), a destination address 702 (the address of the receiving apparatus), an information identifier 703 (the information identifier of the information A), a division number (1) 704, a total division number (n) 705, processable divided information group information 706 and a divided information block A(1) 707. Since the first transmission packet has the information of the total division number (n), the receiving apparatus 101 can recognize how many blocks the information A has been divided into.

The second transmission packet has a source address 701, a destination address 702, an information identifier 703, a division number (2) 704 and a divided information block A(2) 707. The pth transmission packet has a source address 701, a destination address 702, an information identifier 703, a division number (p) 704, processable divided information group information 706 and a divided information block A(p) 707. The processable divided information group information 706 includes the number p of the first divided information block in a divided information group and the number q of the last divided information block in the divided information group. Instead of these, the number p of the first divided information block in the divided information group and the number of the divided information blocks in the divided information group may also be used. The receiving apparatus 101 can process the information A on a group-by-group basis since the first value p and the last value q of the processable group are included. The unit of the processable divided information group, q - p + 1, may be fixed or variable.

The nth transmission packet has a source address 701, a destination address 702, an information identifier 703, a division number (n) 704, a divided information block A(n) 707 and NULL data 708. In Embodiment 3, all the divided information blocks A(i) 707 have the same data length L. The NULL data 708 has a data length derived from (the same data length L - the data length of the divided information block A(n)).

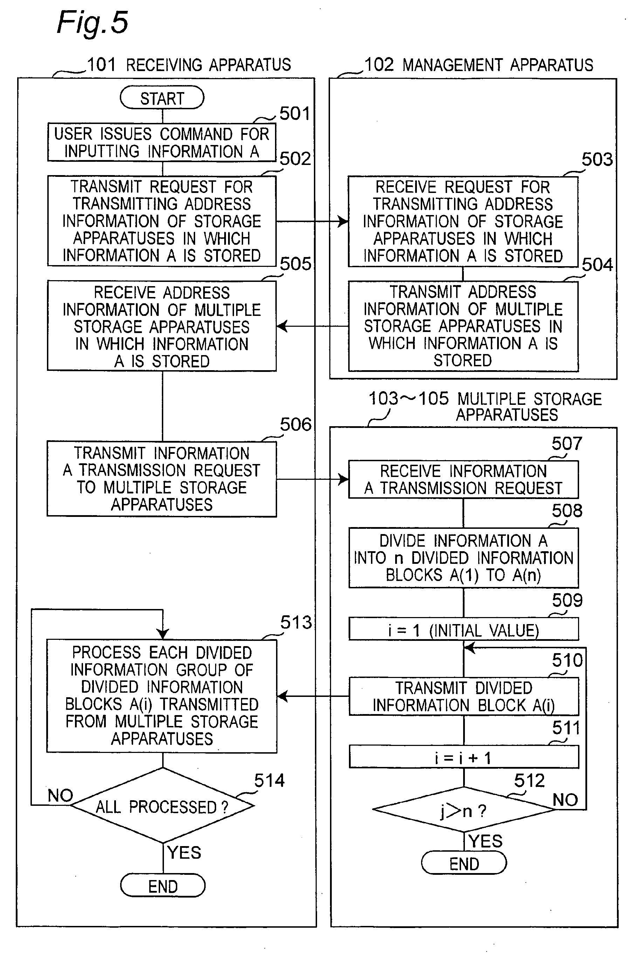

FIG. 5 is the flowchart of the receiving system in accordance with Embodiment 3.

The user inputs an information A input command to the operation section 111 of the receiving apparatus 101 (at step 501). The communication section 112 transmits a request for transmitting the address information of the storage apparatuses in which the information A is stored, to the management apparatus 102 via the communication network 106 (at step 502).

The input/output section 121 of the management apparatus 102 receives the request for transmitting the address information of the storage apparatuses in which the information A is stored (at step 503). The retrieving section 122 retrieves the address information of the multiple storage apparatuses in which the information A is stored. The input/output section 121 transmits, to the receiving apparatus 101, the address information of the multiple storage apparatuses in which the information A is stored (at step 504).

The communication section 112 of the receiving apparatus 101 receives the address information of the multiple storage apparatuses in which the information A is stored (at step 505), and transmits an information A transmission request to the multiple storage apparatuses on the basis of the address information (at step 506).

The input/output section 131 of each of the multiple storage apparatuses 103 to 105 receives the information A transmission request (at step 507). The retrieving section 132 retrieves the information A from the information storage section 133. The information dividing section 134 of each of the storage apparatuses 103 to 105 divides the information A stored in the information storage section 133 into n divided information blocks A(1) to A(n) (at step 508). An initial value 1 is set in variable i (at step 509). The input/output section 131 of each of the storage apparatuses 103 to 105 transmits the divided information block A(i) to the receiving apparatus 101 (at step 510), and i is incremented (at step 511). A judgment is made as to whether i is larger than the total division number n or not (at step 512). If i is not larger than the total division number n, the processing returns to step 510 (until i becomes equal to the total division number n), and the input/output section 131 repeats the transmission of the divided information block A(i). Hence, the input/output section 131 of each of the storage apparatuses 103 to 105 sequentially transmits the divided information blocks A(1) to A(n) to the receiving apparatus 101. If i becomes larger than the total division number n at step 512, each of the storage apparatuses 103 to 105 terminates processing.

At step 513, the receiving apparatus 101 processes each processable divided information group of the divided information block A(i) transmitted from the multiple storage apparatuses (the details will be described later). A judgment is made as to whether all the divided information blocks have been processed or not (at step 514); if all the divided information blocks have not been processed, the processing returns to step 513; if all have been processed, the processing terminates.

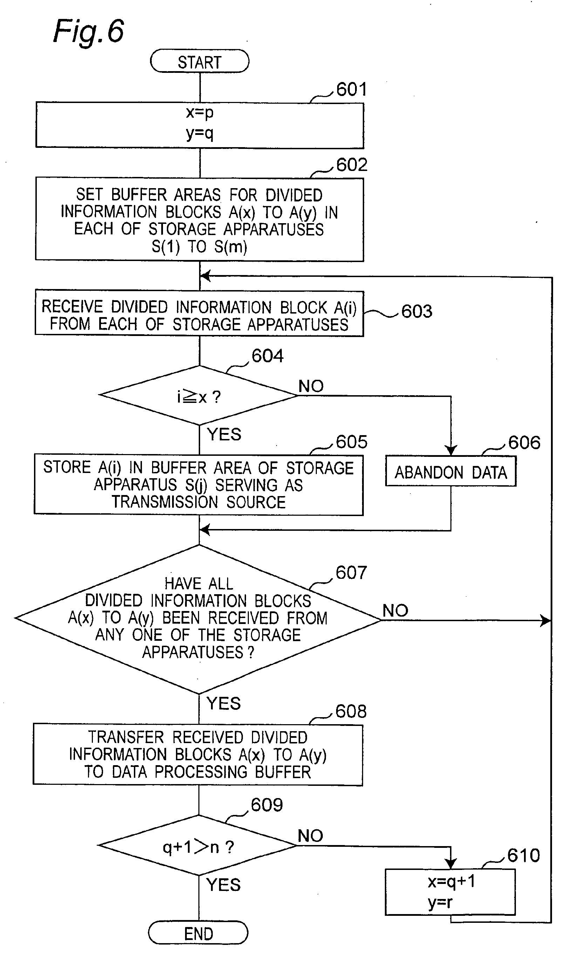

Next, FIG. 6 will be described. FIG. 6 is a flowchart for the receiving system, illustrating step 513 shown in FIG. 5 in detail (the processing of the divided information blocks ranging from division number p to division number q). It is assumed that the receiving apparatus receives the divided information block A(i) (i ≤ i ≤ n) from each of m storage apparatuses S(1) to S(m). Initial values are set so that x = p and y = q (at step 601). The divided information blocks A(p) to A(q) form a processable divided information group. The receiving apparatus 101 sets the buffer areas for the divided information blocks A(x) to A(y) in each of the storage apparatuses S(1) to S(m) (at step 602). At step 603, the divided information block A(i) is received from each of the storage apparatuses. At step 604, a judgment is made as to whether j ≥ x or not. If i is not smaller than x, the processing advances to step 605, and the divided information block A(i) is stored in the buffer area of the storage apparatus S(j) (1 ≤ j ≤ m) serving as a transmission source. At step 604, if i is smaller than x, A(i) has already been received, and the data is abandoned (at step 606).

At step 607, a judgment is made as to whether all the divided information blocks A(x) to A(y) have been received from any one of the storage apparatuses or not; if they have been received, the processing advances to step 608, and the received divided information blocks A(x) to A(y) are transferred to the data processing buffer 116. If they have not yet been received from all the storage apparatuses at step 607, the processing returns to step 603, and the divided information block A(i) is received from each storage apparatus. After step 608, a judgment is made as to whether q + 1 > n or not (at step 609); if q + 1 > n, the receiving is completed, and if q + 1 > n is not satisfied, the processing advances to step 610, x = q + 1 and y = r are set, and the processing returns to step 603. x = q + 1 designates the number of the first divided information block of the next divided information group, and y = r is the number of the last divided information block of the next divided information group. In this embodiment, the value r is included in the data packet including the first divided information block of the next divided information group.

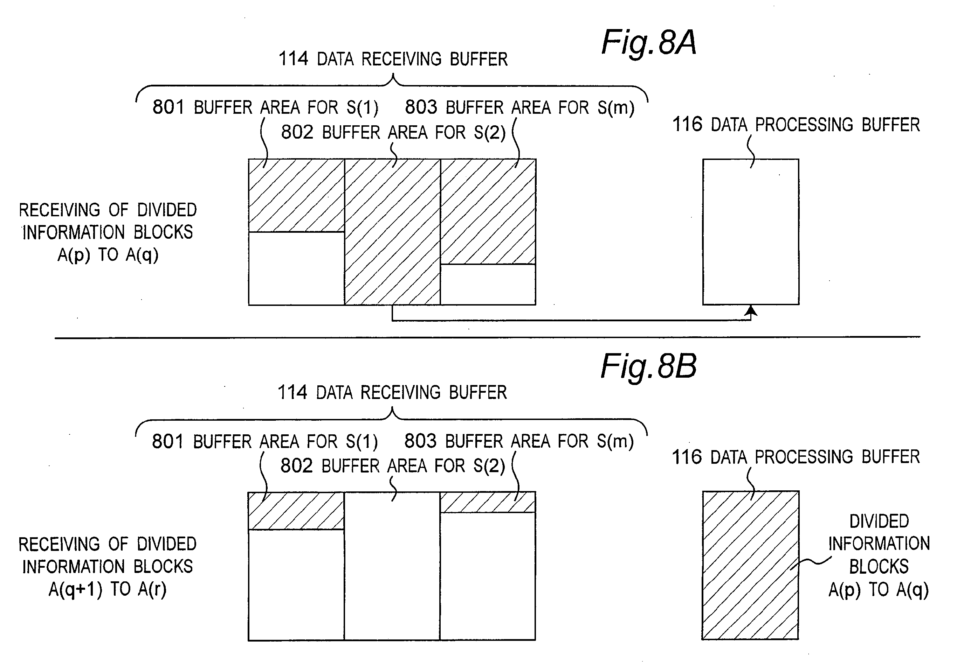

A state wherein the receiving apparatus 101 prepares buffer areas inside the data receiving buffer 114, the number of the buffer areas being equal to the number of storage apparatuses in which the information A is stored, and each divided information group of the divided information blocks A is processed will be described using FIG. 8. FIG. 8A shows the data receiving buffer 114 and the data processing buffer 116 at the time when the divided information blocks A(p) to A(q) are being received, and FIG. 8B shows the data receiving buffer 114 and the data processing buffer 116 at the time when the receiving of the divided information blocks A(p) to A(q) has been completed and when the receiving of the divided information blocks A(q + 1) to A(r) has started. When it is assumed that the number of the storage apparatuses in which the information A is stored is m, the data receiving buffer 114 of the receiving apparatus 101 is divided into a buffer area 801 for S(1), a buffer area 802 for S(2) and a buffer area 803 for S(m) (m = 3 in FIG. 8).

The information A transmitted from the storage apparatus S(1) is stored in the buffer area 801 for S(1), the information A transmitted from the storage apparatus S(2) is stored in the buffer area 802 for S(2), and the information A transmitted from the storage apparatus S(m) is stored in the buffer area 803 for S(m), respectively. The receiving apparatus 101 sequentially receives the divided information block A(i) transmitted from each of the storage apparatuses S(1) to S(m) (FIG. 8A). The data in the buffer areas of the data receiving buffer 114 having first received the divided information blocks A(p) to A(q) is transferred to the data processing buffer 116. Then, the buffers 801 to 803 are emptied, and the next divided information blocks A(q + 1) to A(r) are stored in the respective buffer areas. Hence, the receiving apparatus 101 can select only the group of the divided information blocks A(i) having received first, carries out processing and output the processed information from the output section 117.

For example, in FIG. 9, a case wherein A(3) to A(5) form a divided information group will be described. With respect to the divided information blocks A(3) and A(4), the divided information blocks transmitted from the storage apparatus 105 have reached the receiving apparatus first; however, with respect to all the divided information blocks A(3) to A(5), the divided information blocks transmitted from the storage apparatus 104 have reached the receiving apparatus first. The selection section 113 transfers the divided information blocks A(3) to A(5) transmitted from the storage apparatus 104 to the data processing section 115 and abandons the divided information blocks transmitted from the other storage apparatuses.

In Embodiment 3, the receiving apparatus 101 carried out processing for each divided information group. If it is ensured that all the divided information blocks A(i) output from all the storage apparatuses are the same, the selection section can process the divided information blocks, one by one, in a way similar to that of Embodiment 1 even when for example the processing of decompressing compressed video information is carried out for each divided information group.

Even in Embodiment 2, it is needless to say that the method of carrying out processing for each divided information group is applicable. The present invention is applicable to a receiving apparatus for receiving any information, but it is particularly suited for a receiving apparatus for receiving information of very large quantities (for example, video information or audio information).

The present invention has an advantageous effect capable of realizing a receiving apparatus, a receiving system and a receiving method wherein a waiting time until the user obtains information is short and a function error hardly occurs even if a communication failure occurs with one storage apparatus, for example.

Although the present invention has been described with respect to its preferred embodiments in some detail, the disclosed contents of the preferred embodiments may change in the details of the structure thereof, and any changes in the combination and sequence of the component may be attained without departing from the scope and spirit of the claimed invention.

### INDUSTRIAL APPLICABILITY

The present invention is applicable for receiving apparatuses, receiving systems and receiving methods for obtaining information from numerous download sites on the Internet.

## Claims

1. A receiving apparatus comprising:
an operation section to which an information receiving command is input,
a communication section for transmitting transmission request information for requesting the transmission of the information input to said operation section to multiple storage apparatuses and for sequentially receiving divided information blocks obtained by dividing said information and transmitted from said multiple storage apparatuses,
a selection section for selecting only said divided information block received first from one of said storage apparatuses or a predetermined group of said divided information blocks with respect to each of said divided information blocks received by said communication section or each predetermined group of said divided information blocks, and
an output section for outputting said divided information block or the predetermined group of said divided information blocks selected by said selection section.

2. A receiving apparatus in accordance with claim 1, wherein said communication section transmits, to a management apparatus, address information transmission request information for requesting the address information of said storage apparatuses in which said information is stored, receives the address information of said multiple storage apparatuses from said management apparatus and transmits transmission request information for requesting the transmission of said information to said multiple storage apparatuses on the basis of said address information.

3. A receiving system wherein said management apparatus, said multiple storage apparatuses and said receiving apparatus set forth in claim 1 or 2 are connected via a communication network.

4. A receiving method comprising:
an operation input step of inputting an information receiving command,
a transmission request step of transmitting transmission request information for requesting the transmission of said information to multiple storage apparatuses,
a divided information receiving step of sequentially receiving divided information blocks obtained by dividing said information and transmitted from said multiple storage apparatuses,
a selection step of selecting only said divided information block received first from one of said storage apparatus or a predetermined group of said divided information blocks with respect to each of said divided information blocks or each predetermined group of said divided information blocks, and
an output step of outputting said divided information block or the predetermined group of said divided information blocks having been selected.

5. A receiving method in accordance with claim 4, further comprising:
an address information transmission requesting step for transmitting, to a management apparatus, address information transmission request information for requesting the address information of said storage apparatuses in which said information is stored, and
an address information receiving step of receiving the address information of said multiple storage apparatuses from said management apparatus, wherein
in said transmission requesting step, said transmission request information is transmitted to said multiple storage apparatuses on the basis of said address information having been received.
